# NEUE EUROPÄISCHE PATENTSCHRIFT

(11) **EP 1 476 322 B2**
(45) Veröffentlichungstag und Bekanntmachung des Hinweises auf die Entscheidung über den Einspruch: **01.02.2012**
(45) Hinweis auf die Patenterteilung: 28.12.2005
(21) Anmeldenummer: 03702630.9
(22) Anmeldetag: 12.02.2003
(51) Int. Cl.: B60J 10/06, B60J 10/08

(54) **DICHTUNGSANORDNUNG, INSBESONDERE ZUM ABDICHTEN EINER TÜR GEGENÜBER DER KAROSSERIE EINES KRAFTFAHRZEUGS**
SEALING ARRANGEMENT, PARTICULARLY FOR EFFECTING A SEALING BETWEEN A DOOR AND THE BODY OF A MOTOR VEHICLE
DISPOSITIF D'ETANCHEITE, DESTINE EN PARTICULIER A ASSURER L'ETANCHEITE ENTRE UNE PORTE ET LA CARROSSERIE D'UN VEHICULE AUTOMOBILE

(30) Priorität: 22.02.2002 DE 10207682
(43) Veröffentlichungstag der Anmeldung: 17.11.2004
(73) Patentinhaber: Metzeler Automotive Profile Systems GmbH, 88131 Lindau/Bodensee (DE)
(72) Erfinder: KULKA, Thomas, 88131 Lindau (DE); SOLF, Bernd, 88069 Tettnang (DE)
(74) Vertreter: Schober, Christoph D.
(86) Internationale Anmeldenummer: PCT/EP2003/001391
(87) Internationale Veröffentlichungsnummer: WO 2003/070501

(56) Entgegenhaltungen:
- EP-A1- 0 308 377
- GB-A- 048 349
- GB-A- 2 361 020
- JP-A- 2 227 322
- JP-A- 10 287 131
- JP-U- H0 212 924
- JP-U- H0 259 051
- JP-U- H0 371 924
- JP-U- 60 165 212
- JP-U- 62 127 811
- JP-U- 64 024 616
- JP-U- H01 176 517
- JP-U- H02 145 518
- US-A- 4 656 784
- US-A- 5 882 766
- US-B1- 6 240 677

## Beschreibung

Die Erfindung betrifft eine Dichtungsanordnung, insbesondere zum Abdichten einer Tür gegenüber der Karosserie eines Kraftfahrzeugs. Die Dichtungsanordnung ist mit einem aus einem elastomeren Werkstoff gefertigten Dichtungsprofil versehen, das einen an einem Flansch der Tür festlegbaren Befestigungsabschnitt, einen ersten, bei geschlossener Tür an der Karosserie anliegenden Dichtungsabschnitt und einen zweiten, eine in der Tür angeordnete Fensterscheibe abdichtenden Dichtungsabschnitt aufweist.

Eine derartige Dichtungsanordnung wird in der gattungsgemäßen EP 0 182 318 B1 beschrieben. Die bekannte Dichtungsanordnung dient zum einen dazu, eine Fensterscheibe in der Tür eines Kraftfahrzeugs abzudichten. Zum anderen wird durch die Dichtungsanordnung die Tür gegenüber dem Dachbereich der Karosserie des Kraftfahrzeugs abgedichtet. Zu letzterem Zweck weist ein einstückig ausgebildetes Dichtungsprofil der Dichtungsanordnung einen Dichtungsbereich auf, der mit zwei bei geschlossener Tür an der Karosserie anliegenden Dichtlippen versehen ist. Die Dichtlippen bestehen aus einem verhältnismäßig weichen Gummi mit einer Shore A Härte von 50 bis 70. Als Nachteil der bekannten Dichtungsanordnung hat sich zudem eine unzureichende Anpassungsfähigkeit der an der Karosserie anliegenden Dichtlippen hinsichtlich dem aus Fertigungsgründen unvermeidlichen Toleranzbereich für das Spaltmaß zwischen Tür und Karosserie erwiesen. Vor allem die der Außenseite der Tür zugewandte Dichtlippe neigt bei einem vergleichsweise schmalen Spaltmaß zwischen Tür und Karosserie dazu, sich von der Karosserie abzuheben. Dies hat zur Folge, daß während der Fahrt des Kraftfahrzeugs die Dichtlippe zu flattern beginnt, wodurc unerwünschte Windgeräusche entstehen.

Aus der oben genannten gattungsgemäßen EP 0 182 318 B1 ist es ferner bekannt, anstelle der zwei Dichtlippen eine Hohlkammerdichtung vorzusehen, die bei geschlossener Tür an dem Dachbereich der Karosserie anliegt. Eine derartige Hohlkammerdichtung ist mit dem Nachteil verbunden, daß mitunter sogenannte Knarzgeräusche entstehen, die weder durch eine reibungsvermindernde Dichtung noch durch eine Beflockung der an dem Dachbereich der Karosserie anliegenden Fläche der Hohlkammerdichtung gänzlich beseitigt werden können.

Der Erfindung liegt die Aufgabe zugrunde, eine Dichtungsanordnung der eingangs definierten Art dahingehend weiterzubilden, daß sich bei einer zuverlässigen Abdichtung eine toleranzunempfindliche Anpassung des an der Karosserie eines Kraftfahrzeugs anliegenden Dichtungsabschnitts an das Spaltmaß zwischen Tür und Karosserie erzielen läßt.

Zur **Lösung** dieser Aufgabe ist in Übereinstimmung mit Anspruch 1 bei einer Dichtungsanordnung mit den eingangs genannten Merkmalen erfindungsgemäß vorgesehen, daß der erste Dichtungsabschnitt mit einer vorderen Dichtlippe und einer hinteren Dichtlippe versehen ist. Die vordere Dichtlippe umfaßt ein sich zu der hinteren Dichtlippe hin erstreckendes Spannband, das eine der Karosserie zugewandte Wandung einer Hohlkammer bildet. Zudem sind das Spannband und die hintere Dichtlippe aus Zellgummi oder Moosgummi gefertigt.

Eine derartige Dichtungsanordnung beruht auf der Erkenntnis, daß die Fertigung des Spannbands und der hinteren Dichtlippe aus Zellgummi oder Moosgummi dem an die Karosserie anlegbaren Dichtungsabschnitt ein verhältnismäßig großes Dehnungsvermögen verleiht. Auf diese Weise ist eine Anpassung an toleranzbedingte Abweichungen im Spaltmaß zwischen Karosserie und Tür sichergestellt, und zwar ohne daß die der Außenseite der Tür zugewandte Kontur des Dichtungsabschnitts beeinträchtigt wird. Ein Flattern der vorderen Dichtlippe während der Fahrt des Kraftfahrzeugs, wie es im Stand der Technik mitunter auftritt, wird somit vermieden. Hierzu trägt auch bei, daß das Spannband eine der Karosserie zugewandte Wandung einer Hohlkammer bildet. Die Hohlkammer erhöht zum einen die Verformungsfähigkeit des Dichtungsabschnitts, so daß die vordere Dichtlippe auch bei einem vergleichsweise engen Spaltmaß zwischen Karosserie und Tür nicht von der Karosserie abhebt. Zum anderen sorgt die Hohlkammer für eine Kompensation etwaig auftretender Relativbewegungen zwischen Karosserie und Tür. Nicht zuletzt bewirkt das Zugspannungen aufnehmende Spannband ein dichtes Anliegen der vorderen und hinteren Dichtlippe an der Karosserie und stellt mithin eine zuverlässige Abdichtung und eine Verringerung von durch Reibung entstehenden Knarzgeräuschen sicher.

Vorteilhafte Ausgestaltungen der erfindungsgemäßen Dichtungsanordnung stellen die Gegenstände der abhängigen Ansprüche 2 bis 8 dar.

So ist es etwa in Hinsicht auf eine wirksame Abdichtung von Vorteil, das Spannband und/oder die hintere Dichtlippe mit einer Beschichtung, vorzugsweise Beflockung, zu versehen. Eine Beflockung trägt außerdem dazu bei, die durch Relativbewegungen zwischen dem Dichtungsabschnitt und der Karosserie hervorgerufene Reibgeräusche zu reduzieren.

Erfindungsgemäß umfasst die vordere Dichtlippe einen der Außenseite der Tür zugewandten Außenabschnitt, der eine Wandung der Hohlkammer bildet. Die vordere Dichtlippe setzt sich auf diese Weise aus dem Außenabschnitt und einem Teil des Spannbands zusammen. Indem der Außenabschnitt eine Wandung der Hohlkammer bildet, ist eine hohe Verformungsfähigkeit der vorderen Dichtlippe sichergestellt.

Erfindungsgemäß ist der Aüßenabschnit aus einem kompakteren elastomeren Werkstoff gefertigt als das Spannband, um eine in ästhetischer Hinsicht ansprechende Ausgestaltung zu erreichen. Da der Außenabschnitt auf der der Außenseite der Tür zugewandten Seite der vorderen Dichtlippe angeordnet ist, werden das Spannband und die hintere Dichtlippe, die beide aus in optischer Hinsicht weniger ansprechendem Zell- oder Moosgummi bestehen, für einen Betrachter verdeckt. Das Vorsehen eines kompakteren Elastomers, beispielsweise sogenannter Kompaktgummi, für den Außenbereich hat zudem zur Folge, daß die in dem an der Karosserie anlegbaren Dichtungsabschnitt auftretenden Zugspannungen vornehmlich von dem Spannband aufgenommen werden.

Erfindungsgemäß besteht der Befestigungsabschnitt in einem der Außenseite der Tür zugewandten Bereich aus dem gleichen Werkstoff wie der Außenabschnitt der vorderen Dichtlippe. Durch eine derartige Ausgestaltung wird ein einheitliches Erscheinungsbild des Dichtungsprofils auf der einem Betrachter zugewandten Außenseite der Tür sichergestellt.

In vorteilhafter Ausgestaltung besteht überdies auch der zweite Dichtungsabschnitt aus dem gleichen Werkstoff wie der Außenabschnitt der vorderen Dichtlippe. Der zweite Dichtungsabschnitt dient zum Abdichten einer in der Tür angeordneten Fensterscheibe. Aufgrund der Verwendung desselben Werkstoffs sowohl für den zweiten Dichtungsabschnitt als auch den Außenabschnitt der vorderen Dichtlippe ergibt sich eine in wirtschaftlicher Hinsicht vergleichsweise kostengünstige Fertigung.

Um eine verläßliche Befestigung des Dichtungsprofils auf dem Flansch der Tür zu gewährleisten, ist der Befestigungsabschnitt vorteilhafterweise mit einer Verstärkungseinlage versehen. Eine solche Verstärkungseinlage kann in an sich bekannter Weise eine im wesentlichen U-förmige Gestalt aufweisen und als Stanzteil aus Aluminium oder Stahl gefertigt sein.

Schließlich wird in vorteilhafter Weiterbildung der erfindungsgemäßen Dichtungsanordnung ein einstückig gefertigtes, vorzugsweise koextrudiertes, Dichtungsprofil vorgeschlagen, das sich mit einem relativ geringen Herstellungsaufwand fertigen läßt.

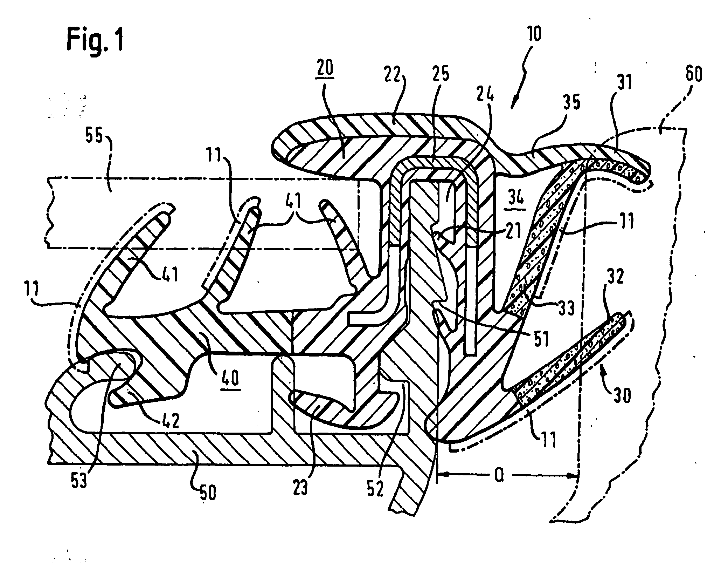

Einzelheiten und weitere Vorteile der erfindungsgemäßen Dichtungsanordnung ergeben sich aus der nachfolgenden Beschreibung eines bevorzugten Ausführungsbeispieles. In der zugehörigen Zeichnung veranschaulicht in schematischer Weise die einzige
- Fig. 1: einen Querschnitt durch ein an einem Flansch einer Tür angeordnetes Dichtungsprofil der erfindungsgemäßen Dichtungsanordnung.

Die in Fig. 1 dargestellte Dichtungsanordnung dient zum Abdichten einer Tür gegenüber der Karosserie 60 eines Kraftfahrzeugs. Wie Fig. 1 erkennen läßt, weist die Dichtungsanordnung ein aus einem elastomeren Werkstoff koextrudiertes Dichtungsprofil 10 auf. Das einstückige Dichtungsprofil 10 setzt sich aus einem Befestigungsabschnitt 20, einem ersten Dichtungsabschnitt 30 und einem zweiten Dichtungsabschnitt 40 zusammen.

Der Befestigungsabschnitt 20 ist aus einem ersten elastomeren Werkstoff gefertigt und weist eine im wesentlichen kanalförmige Ausnehmung 24 auf. In der Ausnehmung 24 ist der Befestigungsabschnitt 20 auf einen Flansch 50 der Tür aufgeschoben. Haltelippen 21, die an den Innenwandungen der Ausnehmung 24 angeordnet sind, greifen in entsprechend ausgebildete Hinterschneidungen 51 des Flansches 50, um einen zuverlässigen Halt des Dichtungsprofils 10 auf dem Flansch 50 zu gewährleisten. Zu diesem Zweck ist ferner eine im wesentlichen U-förmige Verstärkungseinlage 25 vorgesehen, die als Stanzteil aus Aluminium oder Stahl gefertigt und in dem Befestigungsabschnitt 20 angeordnet ist. Der Befestigungsabschnitt 20 ist ferner mit einem Verankerungssegment 23 versehen, das in eine weitere Hinterschneidung 52 des Flansches 50 eingreift, um das Dichtungsprofil 10 zuverlässig zu befestigen.

Der zweite Dichtungsabschnitt 40 dient zum Abdichten einer entweder feststehend oder beweglich ausgebildeten Fensterscheibe 55. Der Dichtungsabschnitt 40 ist aus einem zweiten elastomeren Werkstoff gefertigt und mit Dichtlippen 41 versehen, welche die Fensterscheibe 55 führen und abdichten. Hinsichtlich letzterem sind einige der Dichtlippen 41 mit einer Beflockung 11 versehen. Der Dichtungsabschnitt 40 weist überdies ein Verankerungssegment 42 auf, das zur Befestigung des Dichtungsprofils 10 auf dem Flansch 50 in einen entsprechend ausgestalteten Vorsprung 53 des Flansches 50 formschlüssig eingreift.

Der erste Dichtungsabschnitt 30 ist auf der dem zweiten Dichtungsabschnitt 40 gegenüberliegenden Seite des Befestigungsabschnitts 20 angeordnet. Der Dichtungsabschnitt 30 weist eine vordere Dichtlippe 31 und eine hintere Dichtlippe 32 auf. Die vordere Dichtlippe 31 umfaßt ein sich zu der hinteren Dichtlippe 32 hin erstreckendes Spannband 33, das eine der Karosserie 60 zugewandte Wandung einer Hohlkammer 34 bildet. Sowohl das Spannband 33 als auch die hintere Dichtlippe 32 sind aus Zellgummi gefertigt. Unter Zellgummi im voranstehenden Sinne wird eine poröse Gummiqualität verstanden, die allseits geschlossene Zellen aufweist. Alternativ kann das Spannband 33 und die hintere Dichtlippe 32 auch aus Moosgummi, einem im Treibverfahren hergestellten, porösen Gummi, der sowohl offene als auch geschlossene Zellen aufweist, bestehen. Das Spannband 33 und die hintere Dichtlippe 32 sind auf ihrer der Karosserie 60 zugewandten Seite ebenfalls mit einer Beflockung 11 versehen, um eine zuverlässige Abdichtung zu gewährleisten.

Die vordere Dichtlippe 31 umfaßt weiterhin einen der Außenseite der Tür zugewandten Außenabschnitt 35, der eine weitere Wandung der Hohlkammer 34 bildet. Die dem ersten Dichtungsabschnitt 30 ein verhältnismäßig hohes Dehnungsvermögen verleihende Hohlkammer 34 wird danach durch das Spannband 33, den Außenabschnitt 35 und den Befestigungsabschnitt 20 begrenzt. Der Außenabschnitt 35 ist ebenfalls aus dem zweiten elastomeren Werkstoff gefertigt, der kompakter ist als der Zell- oder Moosgummi des Spannbands 33 und der hinteren Dichtlippe 32. Bei dem zweiten elastomeren Werkstoff kann es sich insofern um sogenannten Kompaktgummi handeln.

Der Außenabschnitt 35 geht über in einen der Außenseite der Tür zugewandten Bereich 22 des Befestigungsabschnitts 20. Der Bereich 22 verdeckt den restlichen Teil des Befestigungsabschnitts 20 und besteht wie der Außenabschnitt 35 und der zweite Dichtungsabschnitt 40 aus dem zweiten elastomeren Werkstoff. Auf diese Weise ist sichergestellt, daß das Dichtungsprofil 10 auf der einem Betrachter zugewandten Außenseite der Tür ein einheitliches und in ästhetischer Hinsicht ansprechendes Erscheinungsbild vermittelt.

Die zuvor beschriebene Dichtungsanordnung zeichnet sich einerseits durch eine zuverlässige Abdichtung der Tür gegenüber der Karosserie 60 aus. Andererseits besticht die Dichtungsanordnung durch eine toleranzunempfindliche Anpassung des ersten Dichtungsabschnitts 30 an das Spaltmaß a zwischen Karosserie 60 und Tür. Grund hierfür ist, daß die vordere Dichtlippe 31 das sich zu der hinteren Dichtlippe 32 hin erstreckende Spannband 33 umfaßt. Das Spannband 33 nimmt aufgrund seiner Verformungsfähigkeit die bei geschlossener Tür in dem ersten Dichtungsabschnitt 30 auftretenden Zugspannungen auf und sorgt dafür, daß die vordere Dichtlippe 31 stets an der Karosserie 60 anliegt. Neben dem Erreichen einer wirksamen Abdichtung wird somit zugleich ein Abstehen der vorderen Dichtlippe 31 bei einem verhältnismäßig engen Spaltmaß a vermieden. Ein Flattern der Dichtlippe 31 und die damit einhergehenden Windgeräusche während der Fahrt des Kraftfahrzeugs bleiben aus. Zudem werden sogenannte Knarzgeräusche aufgrund einer Relativbewegung von Dichtungsabschnitt und Karosserie unterdrückt oder zumindest signifikant verringert. Durch die Fertigung des Außenabschnitts 35 der vorderen Lippe 31 und des Bereichs 22 des Befestigungsabschnitts 20 aus einem verhältnismäßig kompakten Elastomer wird nicht nur einem ansprechenden optischen Erscheinungsbild Rechnung getragen, sondern zugleich sichergestellt, daß die in dem ersten Dichtungsabschnitt 30 auftretenden Zugspannungen vornehmlich von dem Spannband 33 aufgenommen werden. Nicht zuletzt wird durch das Vorsehen der Hohlkammer 34 einer insgesamt hohen Verformungsfähigkeit des ersten Dichtungsabschnitts 30 Rechnung getragen.

### Bezugszeichenliste

- 10: Dichtungsprofil
- 11: Beflockung

- 20: Befestigungsabschnitt
- 21: Haltelippe
- 22: Bereich
- 23: Verankerungssegment
- 24: Ausnehmung
- 25: Verstärkungseinlage

- 30: Dichtungsabschnitt
- 31: vordere Dichtlippe
- 32: hintere Dichtlippe
- 33: Spannband
- 34: Hohlkammer
- 35: Außenabschnitt

- 40: Dichtungsabschnitt
- 41: Dichtlippe
- 42: Verankerungssegment

- 50: Flansch
- 51: Hinterschneidung
- 52: Hinterschneidung
- 53: Vorsprung
- 55: Fensterscheibe
- 60: Karosserie

- a: Spaltmaß

## Patentansprüche

1. Dichtungsanordnung, insbesondere zum Abdichten einer Tür gegenüber der Karosserie (60) eines Kraftfahrzeugs, mit einem aus einem elastomeren Werkstoff gefertigten Dichtungsprofil (10), das einen an einem Flansch (50) der Tür festlegbaren Befestigungsabschnitt (20), einen ersten, bei geschlossener Tür an der Karosserie (60) anliegenden Dichtungsabschnitt (30) und einen zweiten, eine in der Tür angeordnete Fensterscheibe (55) abdichtenden Dichtungsabschnitt (40) aufweist, **dadurch gekennzeichnet, daß** der erste Dichtungsabschnitt (30) mit einer vorderen Dichtlippe (31) und einer hinteren Dichtlippe (32) versehen ist, wobei die vordere Dichtlippe (31) ein sich zu der hinteren Dichtlippe (32) hin erstreckendes Spannband (33) umfaßt, das eine der Karosserie (60) zugewandte Wandung einer Hohlkammer (34) bildet, und wobei das Spannband (33) und die hintere Dichtlippe (32) aus Zellgummi oder Moosgummi gefertigt sind wobei die vordere Dichtlippe (31) einen der Außenseite der Tür zugewandten Außenabschnitt (35) umfaßt, der eine Wandung der Hohlkammer (34) bildet, wobei der Außenabschnitt (35) aus einem kompakteren elastomeren Werkstoff gefertigt ist als das Spannband (33) und wobei der Befestigungsabschnitt (20) in einem der Außenseite der Tür zugewandten Bereich (22) aus dem gleichen Werkstoff wie der Außenabschnitt (35) der vorderen Dichtlippe (31) besteht.

2. Dichtungsanordnung nach Anspruch 1, **dadurch gekennzeichnet, daß** das Spannband (33) und/oder die hintere Dichtlippe (32) mit einer Beschichtung, vorzugsweise Beflockung (11), versehen sind.

3. Dichtungsanordnung nach Anspruch 1 oder 2, **dadurch gekennzeichnet, daß** der zweite Dichtungsabschnitt (40) aus dem gleichen Werkstoff wie der Außenabschnitt (35) der vorderen Dichtlippe (31) besteht.

4. Dichtungsanordnung nach einem der Ansprüche 1 bis 3, **dadurch gekennzeichnet, daß** der Befestigungsabschnitt (20) mit einer Verstärkungseinlage (25) versehen ist.

5. Dichtungsanordnung nach einem der Ansprüche 1 bis 4, **gekennzeichnet durch** ein einstückig gefertigtes, vorzugsweise koextrudiertes, Dichtungsprofil (10).

## Claims

1. A sealing arrangement, particularly for sealing a door from the body (60) of a motor vehicle, including a sealing profile (10) made of an elastomeric material, comprising a fastener portion (20) definable by a flange (50) of said door, a first sealing portion (30) contacting said body (60) when said door is closed, and a second sealing portion (40) sealing a window pane (55) arranged in said door, **characterized in that** said first sealing portion (30) is provided with a front sealing lip (31) and a rear sealing lip (32), said front sealing lip (31) comprising tensioning tape (33) extending to said rear sealing lip (32), said tensioning tape (33) forming a wall of a hollow chamber (34) facing said body (60), said tensioning tape (33) and rear sealing lip (32) are made of cellular or sponge rubber, said front sealing lip (31) comprising an outer portion (35) facing the outer side of said door, said outer portion (35) forming a wall of said hollow chamber (34), said outer portion (35) being made of a more compact elastomeric material than that of said tensioning tape (33), and that said fastener portion (20) in a portion (22) facing the outer side of said door being made of the same material as that of said outer portion (35) of said front sealing lip (31).

2. The sealing arrangement as set forth in claim 1, **characterized in that** said tensioning tape (33) and/or said rear sealing lip (32) is/are provided with a coating, particularly a flock coating (11).

3. The sealing arrangement as set forth in claim 1 or 2, **characterized in that** said second sealing portion (40) is made of the same material as that of said outer portion (35) of said front sealing lip (31).

4. The sealing arrangement as set forth in any of the claims 1 to 3, **characterized in that** said fastener portion (20) is provided with a bracing insert (25).

5. The sealing arrangement as set forth in any of the claims 1 to 4, **characterized by** a sealing profile (10) made in one piece, preferably coextruded.

## Revendications

1. Agencement d'étanchéité, en particulier pour étancher une portière par rapport à la carrosserie (60) d'un véhicule automobile, comprenant un profil d'étanchéité (10) qui est fabriqué à partir d'un matériau élastomère et qui comporte un tronçon de fixation (20) susceptible d'être immobilisé sur une bride (50) de la portière, un premier tronçon d'étanchéité (30) appliqué contre la carrosserie (60) en position fermée de la portière, et un second tronçon d'étanchéité (40) étanchant une vitre (55) agencée dans la portière, **caractérisé en ce que** le premier tronçon d'étanchéité (30) est pourvu d'une lèvre d'étanchéité antérieure (31) et d'une lèvre d'étanchéité postérieure (32), la lèvre d'étanchéité antérieure (31) comprenant un ruban de serrage (33) qui s'étend vers la lèvre d'étanchéité postérieure (32) et qui forme une paroi d'une chambre creuse (34), paroi qui est tournée vers la carrosserie (60), le ruban de serrage (33) et la lèvre d'étanchéité postérieure (32) étant fabriqués à partir de caoutchouc cellulaire ou de caoutchouc mousse, la lèvre d'étanchéité antérieure (31) comprenant un tronçon extérieur (35) tourné vers le côté extérieur de la portière et formant une paroi de la chambre creuse (34), le tronçon extérieur (35) étant fabriqué à partir d'un matériau élastomère plus compact que celui du ruban de serrage (33), et, dans une zone (22) tournée vers le côté extérieur de la portière, le tronçon de fixation (20) étant constitué du même matériau que le tronçon extérieur (35) de la lèvre d'étanchéité antérieure (31).

2. Agencement d'étanchéité selon la revendication 1, **caractérisé en ce que** le ruban de serrage (33) et/ou la lèvre d'étanchéité postérieure (32) est/sont pourvu(e)s d'un revêtement, de préférence d'un flocage (11).

3. Agencement d'étanchéité selon l'une ou l'autre des revendications 1 et 2, **caractérisé en ce que** le second tronçon d'étanchéité (40) est constitué du même matériau que le tronçon extérieur (35) de la lèvre d'étanchéité antérieure (1).

4. Agencement d'étanchéité selon l'une des revendications 1 à 3, **caractérisé en ce que** le tronçon de fixation (20) est pourvu d'un insert de renforcement (25).

5. Agencement d'étanchéité selon l'une des revendications 1 à 4, **caractérisé par** un profil d'étanchéité (10) fabriqué d'un seul tenant, de préférence par co-extrusion.
